# EUROPEAN PATENT APPLICATION

(11) **EP 0 880 926 A1**
(43) Date of publication of application: **02.12.1998**
(21) Application number: 97830254.5
(22) Date of filing: 28.05.1997
(51) Int. Cl.: A47J 27/57

(54) **Apparatus and method for the controlled heating of milk**

(71) Applicant: FRABOSK CASALINGHI S.p.A., 25067 Lumezzane S.A. (Brescia) (IT)
(72) Inventor: Sala, Benigno Nino, 25066 Lumezzane Pieve (Brescia) (IT)
(74) Representative: Righetti, Giuseppe

(57) **Abstract**

An apparatus for the controlled heating of milk is provided which comprises an outer pot body (2) having an upper supporting rim (2a) and an inner pot body (3) to be inserted in the outer pot body and having a jutting edge band (3a) adapted to rest on the supporting rim (2a), the pot bodies (2, 3) defining a hollow space or cavity (4) adapted to hold at least water between their surfaces. Also provided is a method of carrying out the controlled heating of milk, which consists in interposing a hollow space filled with a fluid operating at ambient pressure between a container for holding the milk to be heated and a source of heat.

## Description

The present invention relates to an apparatus and method for the controlled heating of milk.

It is known that when heating, boiling and cooking of food is to be carried out, pots to be directly put on a source of heat generally consisting of radiant plates or a flame from a gas cooker can be employed. Heat transmission from the flame to the pot inside through the pot bottom and side walls is carried out at high temperatures enabling the expected functions to be almost always performed.

However, under some situations, traditional pots can have important drawbacks because when liquids such as milk for example are concerned, boiling temperatures are usually reached at which overflowing and spillage can easily take place, which may bring about unpleasant consequences such as dangerous gas leakages due to the flame blowing out or, at best, banal cleaning problems.

In addition, due to the fact that temperatures on the inner pot surface are high and can be hardly controlled, the contained milk can form a sort of film adhering to the pot itself, causing spots and stains on the metal material the elimination of which needs work to be done.

Practically, in particular for heating milk that, as known, does not require boiling, since it is usually available already sterilized by pasteurization, a particular attention and a continuous watch is almost always necessary in order to avoid boiling of same and, as a result, the above mentioned drawbacks. Sometimes however, carelessness and forgetfulness intervene that give rise to even serious consequences.

Under this situation, the technical task underlying the present invention is to devise an apparatus and method for the controlled heating of milk, capable of substantially obviating the above drawbacks.

Within the scope of this technical task it is an important aim of the invention to devise an apparatus and method for the controlled heating of milk avoiding running over of same in a quite absolute manner and without particular attention being required.

The technical task mentioned and the aim specified are substantially achieved by an apparatus which is characterized in that it comprises an outer pot body with an upper supporting rim and an inner pot body insertable in said outer pot body and having a jutting edge band adapted to rest in an operating position on said supporting rim, and in that said outer and inner pot bodies at said operating position define an interspace adapted to hold a fluid between the respective bottoms and side surfaces.

The technical task mentioned and the aim specified are also substantially achieved by a method of carrying out the controlled heating of milk, which is characterized in that it comprises the steps of conveniently arranging a container adapted to hold the milk to be heated and interposing a hollow space or cavity adapted to hold a fluid at ambient pressure between the outer surface of said container and a source of heat.

The description of a preferred but non-exclusive embodiment of an apparatus in accordance with the invention is now given by way of non-limiting example, with reference to the accompanying drawings, in which:

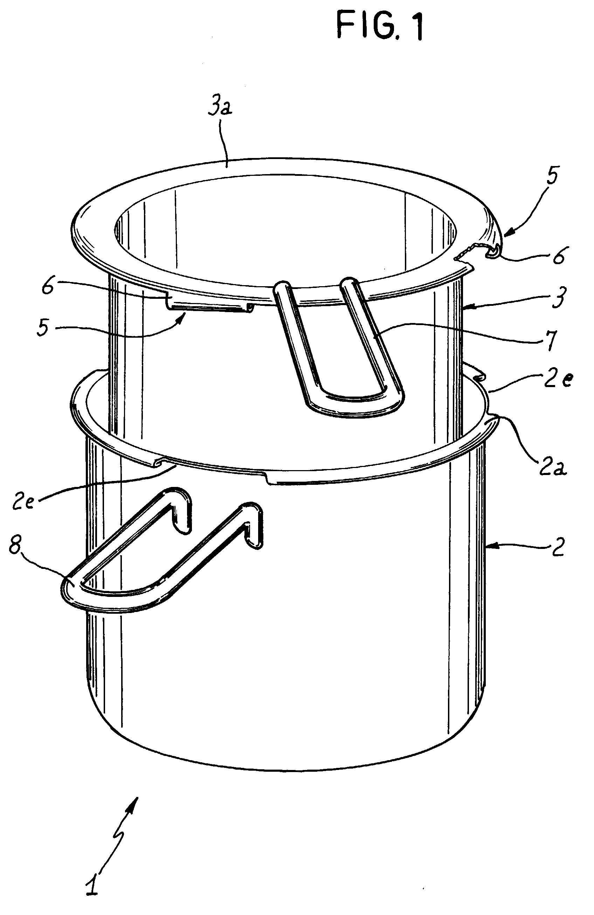

- Fig. 1 is an exploded perspective view of the apparatus;
- Fig. 2 is a sectional view taken along a vertical plane (line II-II in Fig. 4) of the apparatus shown in Fig. 1;
- Figs. 3 and 4 are bottom views of the apparatus shown in Fig. 1 at two differentiated positions of the inner pot body relative to the outer pot body;
- Fig. 5 shows, in cross-sectional view along line V-V in Fig. 4, the supporting rim of the outer pot body and the edge band of the inner pot body in a resting position;
- Fig. 6 is a cross-sectional view taken along line VI-VI in Fig. 4 and reproducing a hook-shaped extension of the inner pot body matching with the supporting rim of the outer pot body; and
- Fig. 7 is a cross-sectional view showing the hook-shaped extension in Fig. 6 disposed at a recess of the supporting rim in the outer pot body.

With reference to the drawings, the apparatus in accordance with the invention is generally identified by reference numeral 1.

It comprises an outer pot body 2 having an upper supporting rim 2a turned outwardly and an inner pot body 3 insertable in the outer pot body 2 and having a jutting edge band 3a of an extent adapted to enable resting of same, in an operating position, on the supporting rim 2a.

The outer and inner pot bodies, 2 and 3, have appropriate sizes so that, in said operating position, they form an hollow space 4 between the respective bottoms 2b and 3b and side surfaces 2c and 3c, which hollow space has a volume adapted to hold a predetermined amount of fluid, water for example, at least in the lower part thereof 4a, depending on the sizes of the pot bodies, and to space out the side surfaces 2c and 3c from each other in order to enable the presence of an important amount of water and/or steam therebetween.

Advantageously, locking means 5 is interposed between the upper supporting rim 2a of the outer pot body 2 and the edge band 3a of the inner pot body 2, said means being adapted to join the two pot bodies together, in said operating position, so as to form a single stable and compact unit.

More particularly, the locking means 5 comprises three engagement portions 6 integral with the edge band 3a, spaced apart 120° from each other and defined by as many hook-shaped extensions of the edge band 3a. The engagement portions 6 are each adapted to lodge a connecting area 2d defined on the supporting rim 2a by a rim end portion. Formed between the connecting areas 2d are three recesses 2e, spaced apart 120° from each other as well, and each adapted to be passed through by a corresponding engagement portion 6.

Practically, the engagement portions 6 and the connecting areas 2d form as many couplings, fitting of which takes place by rotatory sliding of the edge band 3a on the supporting rim 2a, starting from the insertion position of said engagement portions 6 into the recesses 2e.

Preferably, each of said couplings comprises a contact surface 6a which is inclined to the rotatory sliding direction to which said coupling can be subjected so as to progressively clamp the corresponding engagement portions 6 and connecting areas 2d together. This inclined contact surface is made up of a length of the engagement portion 6. More specifically, this length is in the form of a curved hook of a decreasing radius in the rotation direction corresponding to the clamping action between the supporting rim 2a and the edge band 3a.

In order to facilitate the rotating operation of the inner pot body 3 on the outer pot body 2, both pot bodies are provided with respective handles or handgrips 7 and 8 such disposed as to be substantially in alignment when couplings of the locking means 5 are conveniently fitted and there is a complete adhesion between the surfaces of the supporting rim and edge band.

Use and operation of an apparatus for the controlled heating of milk described above mainly as regards structure is as follows.

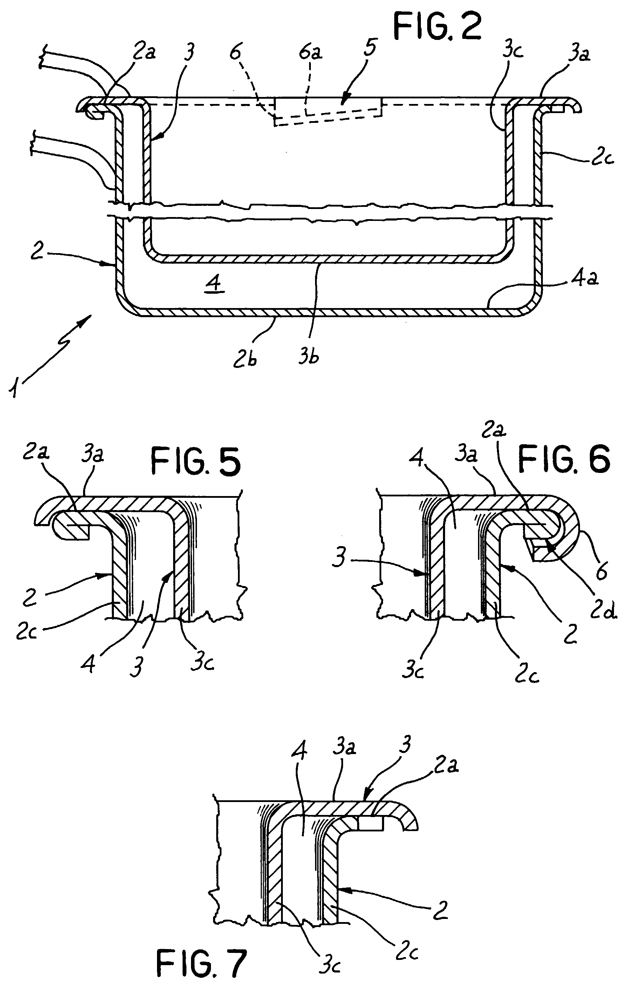

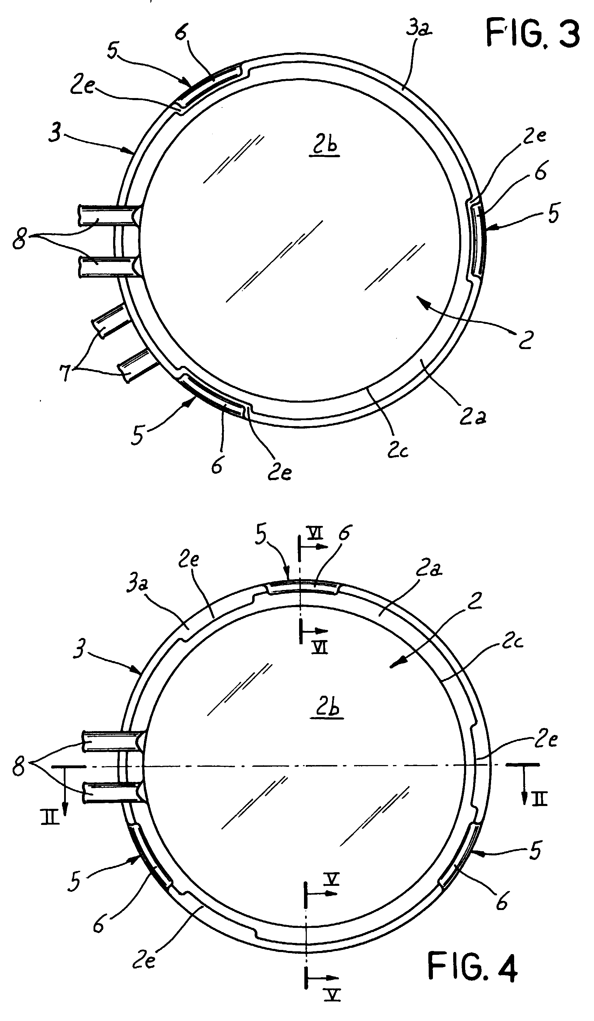

First of all, a minimum amount of fluid is introduced into the outer pot body 2. The inner pot body 3, intended to receive the milk to be heated, is inserted into the outer pot body 2 by fitting the engagement portions 6 into the recesses 2e formed in the outer pot body. With the aid of handles or handgrips 7 and 8, while holding the outer pot body 2 steady, rotation of the inner pot body 3 is caused until said handles or handgrips are in alignment. In this position, the hollow space 4 is not hermetically closed because the mere contact between the supporting rim 2a and edge band 3a (see Fig. 5) does not carry out a tight seal and recesses 2e enable an appropriate natural venting to the surrounding atmosphere as they are not occupied by the hook-shaped extensions 6.

After introduction of milk into the inner pot body, the outer pot body can be brought into contact with a flame or other source of heat. Water in the hollow space 4 reaches its boiling point and transmits heat to the inner pot body 2 and consequently to its contents, also by means of steam being formed in the upper part of the hollow space 4. Since said hollow space is not in a sealed condition, boiling of water takes place at ambient pressure, i.e. at a constant temperature of about 100°C.

Heat is transmitted to the inner pot body 3 at a constant temperature of about 80°C. Therefore the milk therein contained will never be able to reach its boiling temperature, but it is heated at a lower temperature, in any case sufficient to bring it to its due temperature for use.

Even if all water introduced into the hollow space 4 should completely evaporate, an air layer is in any case interposed between the outer body 2 and inner body 3, which is capable of preventing a direct heat transmission from the flame to the inner pot body itself. Under this circumstance too, milk can therefore be heated without however reaching its boiling temperature and therefore without overflowing to the outside.

It is finally pointed out that the outer and inner pot bodies, when heating to a controlled and limited temperature is not required, can be employed separately like two traditional pots.

The invention puts into practice a new method which is an integral part of the present patent too.

It consists in arranging a first container adapted to hold milk to be heated and interposing a hollow space between the outer surface of this first container and a source of heat, such as a flame, which hollow space is defined by a second container located externally of the first one and is adapted to hold a fluid at ambient pressure, such as boiling water.

The invention achieves important advantages.

First of all, the apparatus and method in accordance with the invention enable heating of milk at a constant temperature which is lower than that of boiling water at ambient pressure, so that milk does not adhere to the holding vessel and does not come to the boil, and consequently running over of same from the inner container does not occur.

It is to note that since milk does not exceed a temperature of 80°C, it does not lose any of the organoleptic features that distinguish it and are likely to be progressively lost beyond a given temperature.

It is also to point out that the apparatus in question can be also used for steam cooking of other types of food.

In this case use of the apparatus is very advantageous above all when dietetic cooking of difficult accomplishment in traditional pots is concerned, due to the fact that fats used as the condiment and fats contained in food are subjected to fry due to the involved high temperatures and, as a result, vitamins, proteins and mineral salts which are indispensable for nourishment, are partly eliminated.

In addition, with the use of the inventive apparatus there is no steam coming directly into contact with foods, said foods remaining therefore unimpaired and keeping their nutritive properties unchanged, without destruction of vitamins, proteins and mineral salts.

Due to the constant and reduced temperature, not only fats are prevented from frying and therefore foods are light and digestible, in particular adapted for a controlled dietetic nourishment, but also formation of spots and stains on the surface of the inner pot body is avoided.

Finally, boiling of water at ambient pressure enables installation of safety valves to be eliminated, these valves being prescribed by accident prevention rules for hermetically sealed pots, such as pressure cookers in which steam pressure rises to much higher values than the atmospheric pressure.

## Claims

1. An apparatus for the controlled heating of milk, characterized in that it comprises:
- an outer pot body (2) having an upper supporting rim (2a), and
- an inner pot body (3) insertable in said outer pot body (2) and having a jutting edge band (3a) adapted to rest in an operating position on said upper supporting rim (2a),
and in that said outer (2) and inner (3) pot bodies at said operating position define an interspace adapted to hold at least one fluid between the respective bottoms (2b, 3b) and side surfaces (2c, 3c).

2. An apparatus as claimed in claim 1, characterized in that locking means (5) is interposed between said upper supporting rim (2a) of said outer pot body (2) and said jutting edge band (3a) of said inner pot body (3), which means is adapted to mutually engage said pot bodies at said operating position.

3. An apparatus as claimed in claim 2, characterized in that said locking means (5) comprises at least one engagement portion (6) integral with said edge band (3a) and at least one connecting area (2d) defined in said upper supporting rim (2a), said engagement portion (6) and said connecting area (2d) defining a coupling, fitting of which takes place by rotatory sliding of said edge band (3a) on said upper supporting rim (2a).

4. An apparatus as claimed in claim 3, characterized in that said coupling between said engagement portion (6) and connecting area (2d) comprises at least one contact surface (6a) which is inclined to the direction of said rotatory sliding and is adapted to progressively clamp said engagement portion and connecting area together.

5. An apparatus as claimed in claim 4, characterized in that said engagement portion (6) is defined by a hook-shaped extension of said edge band (3a) and in that said upper supporting rim (2a) has at least one recess (2e) to be passed through by said hook-shaped extension, said connecting area (2d) being defined by an end portion of the upper supporting edge itself which is external to said recess (2e) and is adapted to be lodged in said hook-shaped extension at least partly.

6. An apparatus as claimed in claim 5, characterized in that said hook-shaped extension has at least one curved length of a decreasing radius, adapted to define said inclined contact surface (6a).

7. An apparatus as claimed in claim 5, characterized in that said locking means (5) comprises three said engagement portions (6) spaced apart the same distance from each other on said edge band (3a) and three said connecting areas (2d) spaced apart the same distance from each other on said upper supporting rim, and in that on said upper supporting rim three said recesses (2e) are provided which correspond to three said engagement portions (6).

8. An apparatus as claimed in claim 3, characterized in that said pot bodies (2, 3) have respective handles or handgrips (7, 8) disposed on the bodies themselves so as to be substantially in alignment when said coupling is conveniently fitted.

9. A method of carrying out the controlled heating of milk, characterized in that it comprises the steps of:
- conveniently arranging a container adapted to hold foods or foodstuffs to be heated, and
- interposing a hollow space or cavity adapted to hold a fluid operating at ambient pressure between the outer surface of said container and a source of heat.

10. A method as claimed in claim 9, characterized in that said fluid consists of boiling water.

11. An apparatus for the controlled heating of foods or foodstuffs, comprising a first container for foods and foodstuffs and a second container for a fluid to be brought to a boiling condition at ambient pressure, characterized in that it can be used to carry out heat transfer from said boiling fluid to an amount of food held in said container at a lower temperature than the boiling temperature of said fluid.
